# EUROPEAN PATENT APPLICATION

(11) **EP 2 779 754 A1**
(43) Date of publication of application: **17.09.2014**
(21) Application number: 12851709.1
(22) Date of filing: 29.06.2012
(51) Int. Cl.: H04W 48/08

(54) **METHOD, DEVICE AND SYSTEM FOR FINDING WIRELESS ACCESS POINT**

(30) Priority: 21.11.2011 CN 201110371749
(71) Applicant: Huawei Technologies Co., Ltd., Shenzhen, Guangdong 518129 (CN)
(72) Inventor: ZHAO, Qiyong, Shenzhen, Guangdong 518129 (CN); MA, Xinyou, Shenzhen, Guangdong 518129 (CN)
(74) Representative: Thun, Clemens
(86) International application number: PCT/CN2012/077928
(87) International publication number: WO 2013/075495

(57) **Abstract**

Embodiments of the present invention provide a method, a device, and a system for discovering a wireless access point AP, so as to achieve a purpose of rapidly discovering an available wireless access point and saving electricity of a mobile terminal STA. A base station controller BSC receives a request message sent by a mobile terminal STA, acquires information about one or more APs near the STA from an access controller AC, and sends a notification message to the STA, so that the STA performs an active scan based on a service set identifier SSID to discover a corresponding AP.

## Description

This application claims priority to Chinese Patent Application No. 201110371749.3, filed with the Chinese Patent Office on November 21, 2011 and entitled METHOD, APPARATUS, AND SYSTEM FOR DISCOVERING WIRELESS ACCESS POINT, which is hereby incorporated by reference in its entirety.

### TECHNICAL FIELD

The present invention relates to the field of communications technologies, and in particular, to a method, a device, and a system for discovering a wireless access point.

### BACKGROUND

With gradual application and construction of 3G mobile networks and 4G mobile network technologies, bandwidth and speeds of existing networks are facing large pressure. Implementing offload of a packet switched PS data service by using a Wi-Fi (Wireless Fidelity, wireless fidelity) network to reduce congestion of a cellular data network is widely recognized by operators of various countries and enters a fast promotion period. A Wi-Fi technology is a wireless local area network WLAN technology that can interconnect, in a wireless manner, terminals such as a personal computer and a handheld device, for example, a notebook computer and a mobile phone, and can provide wireless broadband Internet access for a user. An area that a user can access on a Wi-Fi network is referred to as a hotspot (hotspot). A device that supports Wi-Fi connects to a WLAN by establishing a connection with an AP (Access Point, wireless access point).

To access a wireless network, a STA (station, mobile terminal) first needs to discover a nearby available AP, and then the STA establishes a link connection with the AP after authentication and association. A process that an STA acquires information about a nearby available AP is referred to as hotspot discovery. In the prior art, the STA acquires information about an available AP in a scanning manner. A scan is classified into an active scan and a passive scan. In an active scan process, an STA broadcasts a request frame Probe Request to acquire information about an available AP of the STA; and in a passive scan process, the STA does not send a Probe Request frame, but receives a broadcast information Beacon frame that is regularly sent by an AP to discover a nearby available AP.

The inventor finds that, at present, when an STA acquires information about a nearby available AP, a user does not know whether there is an available AP nearby, and a Wi-Fi module is activated to perform a scan only when a data service needs to be used. Irrespective of an active scan or a passive scan, a scanning channel list needs to be configured for the STA and the STA needs to scan channels one by one. When acquiring information about an available AP by using this method, the STA needs to activate a Wi-Fi module, and then scans each frequency one by one. It is possible that no available AP is found at some frequencies. Therefore, there is certain blindness in the prior art, which may cause a waste of power supply and time. In addition, it is difficult for a user to know whether there is an available AP nearby and when to activate a Wi-Fi module, which results in a non-ideal effect of offloading a data service of a macro base station by an AP.

### SUMMARY

Embodiments of the present invention provide a method, an apparatus, and a system for discovering a wireless access point AP, so as to achieve a purpose of rapidly discovering a wireless access point and saving electricity of an STA.

One aspect of the present invention provides a method for discovering a wireless access point AP, where the method includes:
receiving, by a base station controller BSC, a request message sent by a mobile terminal STA, where the request message is used to indicate that the STA initiates a data service and carries position information of the STA;
acquiring, by the base station controller and by using the position information of the STA, information about one or more APs from an access controller AC, where the information includes a service set identifier SSID of the one or more APs; and
sending, by the base station controller, a notification message to the STA, where the notification message carries the SSID of the one or more APs, so that the STA performs an active scan based on the SSID to discover an AP corresponding to the SSID.

Another aspect of the present invention provides a method for discovering a wireless access point AP, where the method includes:
sending, by a mobile terminal STA, a request message to a base station controller BSC, where the request message is used to indicate that the STA initiates a data service and carries position information of the STA;
receiving, by the mobile terminal, a notification message sent by the BSC, where the notification message carries information about one or more APs, and the information includes a service set identifier SSID of the one or more APs; and
activating, by the mobile terminal, a Wi-Fi module, and performing an active scan based on the SSID, to discover an AP corresponding to the SSID.

Another aspect of the present invention provides a wireless communications system, where the system includes:
a base station controller BSC, configured to receive a request message sent by a mobile terminal STA, where the request message is used to indicate that the STA initiates a data service and carries position information of the STA; the BSC is configured to acquire, according to the position information of the STA, information about one or more wireless access points APs from an access controller AC, where the information includes a service set identifier SSID of the one or more APs; and send a notification message to the STA, where the notification message carries the SSID of the one or more APs; and
the access controller AC, configured to provide the information about one or more APs managed by the AC for the base station controller, where the information includes the SSID of the one or more APs.

Another aspect of the present invention provides a base station controller BSC, where the BSC includes:
a receiver, configured to receive a request message, where the request message is used to indicate that the STA initiates a data service and carries position information of the STA, and receive information about one or more wireless access points APs, where the information includes a service set identifier SSID of the one or more APs;
a processor, configured to acquire, by using the position information of the STA, information about one or more APs, where the information includes an SSID of the one or more APs; and
a sender, configured to send a notification message, where the notification message carries the SSID of the one or more APs that is acquired by the processor.

Another aspect of the present invention provides an access controller AC, where the AC includes:
a memory, configured to store information about a wireless access point AP managed by the AC, where the information about the AP includes a service set identifier SSID and position information; and
a sender, configured to send information about one or more APs to a base station controller, where the information includes an SSID of the one or more APs.

Another aspect of the present invention provides a mobile terminal STA, where the STA includes:
a sender, configured to send a request message to a base station controller, where the request message is used to indicate that the STA initiates a data service and carries position information of the STA;
a receiver, configured to receive a notification message sent by the base station controller, where the notification message carries a service set identifier SSID of one or more wireless access points APs; and
a processor, configured to actively scan based on the SSID to discover an AP corresponding to the SSID.

In a method, a device, and a system for discovering an available AP provided by the embodiments of the present invention, when a mobile terminal STA initiates a data service without activating a Wi-Fi module, a base station controller acquires an SSID and other information of one or more APs near the STA and notifies the STA. The STA activates the Wi-Fi module, and scans only some APs based on the SSID, thereby reducing a waste of electricity and time due to an invalid scan, and improving resource utilization of a mobile communications network.

### BRIEF DESCRIPTION OF DRAWINGS

FIG. 1 is a schematic structural diagram of a wireless local area network according to an embodiment of the present invention;
FIG. 2 is a flowchart of a method for discovering a wireless access point according to an embodiment of the present invention;
FIG. 3 is a schematic structural diagram of a wireless communications system according to an embodiment of the present invention;
FIG. 4 is a schematic structural diagram of a base station controller according to an embodiment of the present invention;
FIG. 5 is a schematic structural diagram of an access controller according to an embodiment of the present invention; and
FIG. 6 is a schematic structural diagram of a mobile terminal according to an embodiment of the present invention.

### DESCRIPTION OF EMBODIMENTS

To make the objectives, technical solutions, and advantages of the present invention more comprehensible, the following further describes the technical solutions of the present invention in detail with reference to specific embodiments and accompanying drawings.

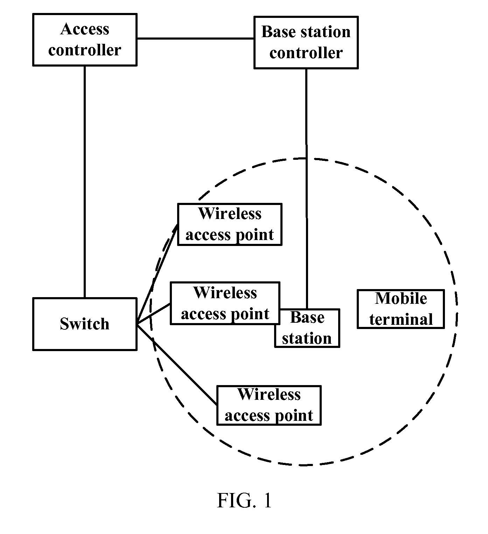

As shown in FIG. 1, in a wireless local area network WLAN, a base station BS is managed by a base station controller BSC. The base station controller refers to different devices in different communications networks, which may be a base station controller BSC, a radio network controller RNC, a baseband unit BBU, and the like. A cell where a BS locates has a plurality of wireless access points APs, a plurality of APs are connected to a switch Switch and are uniformly managed by an access controller AC, and a mobile terminal STA accesses, by using an AP, the wireless local area network WLAN. An embodiment of the present invention provides a method for discovering a wireless access point, which enables a mobile terminal STA to rapidly obtain information about an available AP, thereby achieving an effect of saving electric energy of the STA.

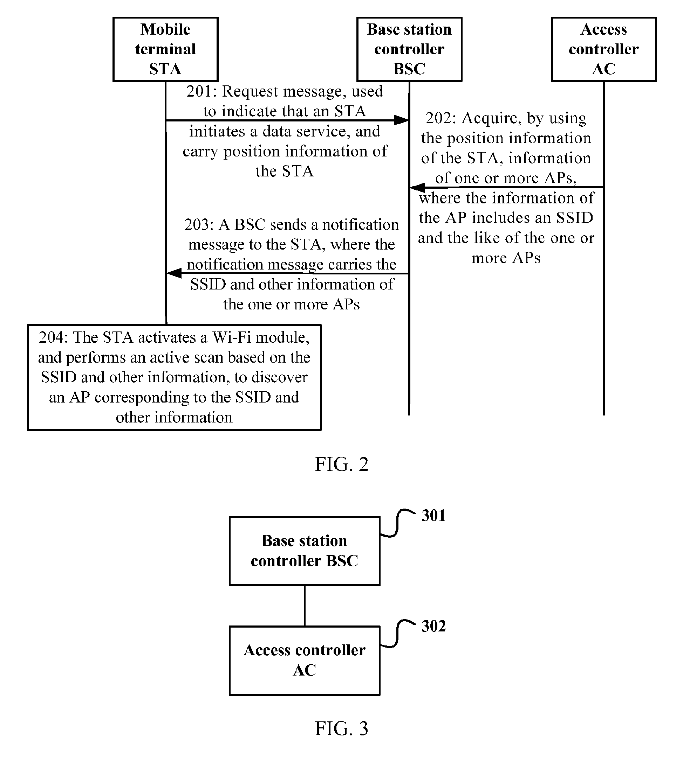

As shown in FIG. 2, an embodiment of the present invention provides a method for discovering a wireless access point AP. When detecting that an STA initiates a data service, a base station controller acquires information about one or more APs near the STA from an AC, the base station controller sends an SSID (Service Set Identifier, service set identifier) and other information of the one or more APs to the STA, and the STA actively scans to discover an AP corresponding to the SSID and other information.

A detailed process of the method for discovering a wireless access point AP provided by this embodiment of the present invention is shown in FIG. 2.

Step 201: The mobile terminal STA sends a request message to the base station controller BSC, where the request message is used to indicate that the STA initiates the data service and carries position information of the STA.

The position information of the STA may be a cell identifier Cell ID or longitude and latitude of the STA.

There may be many implementation manners for step 201, for example, the STA may send a request message to the BSC by using a preset IP address and a preset port, or may use RR (Radio Resource, radio resource management) layer signaling, for example, a Channel Request message, as the request message. It should be noted that the implementation manners of step 201 include but are not limited to the foregoing two manners.

Optionally, after receiving the request message, the BSC may send a request response to the STA to notify the STA that the BSC receives the request message.

Step 202: The base station controller acquires, by using the position information of the STA, the information about the one or more APs from the access controller AC, where the information about the one or more APs includes the service set identifier SSID of the one or more APs, and optionally, may further include one or more pieces of the following information: traffic load, channel frequency, user quantity, MAC address or serial number SN, authentication and encryption manner, and the like.

It should be noted that the request message, which is sent to the BSC by the STA, carries the position information, such as the Cell ID of the STA or the longitude and latitude of the STA. The BSC may directly obtain, by querying according to the Cell ID or the longitude and latitude of the STA carried in the request message, the information about the one or more APs near the STA, or may first obtain the Cell ID according to the longitude and latitude, and then obtain, by querying according to the Cell ID, the information about the one or more APs near the STA. The BSC or AC can maintain a Cell ID or longitude and latitude of an AP in its management range. AP information that is stored by the AC may include plenty of items. The base station controller may acquire all the items, or may acquire only some of the items to save time and channel resources.

There may be a plurality of manners for a base station controller to acquire, by using position information of an STA, information about one or more APs from an AC, which include but are not limited to the following manners:

A first manner: The AC stores position information and an SSID of an AP managed by the AC, and may further include one or more pieces of the following information: traffic load, channel frequency, user quantity, authentication and encryption manner, supported protocol, and the like, where APs are distinguished by MAC addresses or serial numbers SNs. After receiving a request message of the STA, the base station controller may send a query request to the AC, and query an SSID of the one or more APs according to the position information carried in the request message, and may further query one or more pieces of the following information: traffic load, channel frequency, MAC address or SN, user quantity, authentication and encryption manner, supported protocol, and the like.

A second manner: The base station controller may store position information of an AP in its management range, where different APs are distinguished by MAC addresses or SNs. The AC stores an SSID of an AP that the AC manages and may further include one or more pieces of the following information: traffic load, channel frequency, user quantity, authentication and encryption manner, supported protocol, and the like. After receiving a request message of the STA, the base station controller queries a MAC address or an SN of the one or more APs near the STA according to the position information carried in the request message, and then may send a query request to the AC, and query, by using the MAC address or SN, information about a corresponding AP from the AC, where the information about the AP includes an SSID, and may further include one or more pieces of the following information: traffic load, channel frequency, user quantity, authentication and encryption manner, supported protocol, and the like.

A third manner: The AC stores position information and an SSID of an AP that the AC manages, and may further include one or more pieces of the following information: traffic load, channel frequency, user quantity, authentication and encryption manner, supported protocol, and the like, where APs are distinguished by MAC addresses or SNs. The AC regularly and actively reports AP information to the base station controller, where the AP information includes the position information and the SSID of the AP, and may further include the one or more pieces of the following information: traffic load, channel frequency, user quantity, authentication and encryption manner, supported protocol, and the like. After receiving a request message of the STA, the base station controller queries the SSID and other information of one or more APs according to the position information carried in the request message.

Step 203: The base station controller sends a notification message to the STA, where the notification message carries the SSID and other information of the one or more APs.

When sending the notification message to the STA, the BSC may use the preset port in step 201, or may use the RR layer signaling as the notification message. The base station controller may send the AP information to the STA in a form of a short message service message or a pop-up window, or the like.

Optionally, the AP information in step 202 may include a traffic load. Before sending the notification message to the STA, the BSC may first perform filtering on the APs to acquire an AP with a traffic load lower than a preset threshold.

Step 204: The STA activates a Wi-Fi module, and performs an active scan based on the SSID and other information, to discover an AP corresponding to the SSID and other information.

When the STA performs the active scan based on the SSID and other information, it is possible that no available AP is found. The STA may preset a time threshold; and during the scan, if no available AP is found after the time threshold is exceeded, the Wi-Fi module is deactivated, and the STA may further report to the base station controller that switching to Wi-Fi fails, so that the base station controller collects statistics on a switching success rate and updates a switching policy and algorithm in a timely manner.

In a method for discovering an available AP provided by this embodiment of the present invention, when an STA user initiates a data service without activating a Wi-Fi module, a base station controller acquires an SSID and other information of one or more APs near the STA and notifies the STA. The STA activates the Wi-Fi module, and scans only some APs based on the SSID, thereby reducing a waste of electricity and time due to an invalid scan, and improving resource utilization of a mobile communications network.

An embodiment of the present invention provides a wireless communications system. As shown in FIG. 3, the system includes a base station controller BSC and an access controller AC, which are specifically as follows:

A base station controller BSC 301 is configured to receive a request message sent by a mobile terminal STA, where the request message is used to indicate that the STA initiates a data service and carries position information of the STA, and the position information of the STA may be a cell identifier Cell ID or longitude and latitude of the STA. The BSC is configured to acquire, by using the position information of the STA, information about one or more APs from the AC, where the information includes an SSID of the one or more APs, and send a notification message to the STA, where the notification message carries the SSID of the one or more APs and other information.

An access controller AC 302 is configured to provide the information about one or more APs managed by the AC for the base station controller, where the information includes the SSID of the one or more APs.

The information about the one or more APs may further include one or more pieces of the following information: traffic load, channel frequency, user quantity, MAC address or serial number SN, authentication and encryption manner, and the like.

In this embodiment of the present invention, a specific manner in which the base station controller 301 acquires, by using the position information of the STA, information about the one or more APs from the access controller 302 may be any one of the three manners in step 202 of the foregoing method embodiment, but is not limited to the three manners, and the specific steps are not described herein again.

That the base station controller BSC 301 receives a request message sent by a mobile terminal STA may specifically be:

The BSC receives the request message that is sent by the STA by using a preset IP address and a preset port or by using RR (Radio Resource, radio resource management) layer signaling that is used as the request message.

In this embodiment of the present invention, the base station controller may further be configured to perform filtering on the information about the one or more APs that is acquired from the AC, so as to acquire an AP with a traffic load lower than a preset threshold.

In this wireless communication system provided by the embodiment of the present invention, when an STA user initiates a data service without activating a Wi-Fi module, a base station controller acquires an SSID and other information of one or more APs near the STA and notifies the STA. The STA activates the Wi-Fi module, and scans only some APs based on the SSID, thereby reducing a waste of electricity and time due to an invalid scan, and improving resource utilization of a mobile communications network.

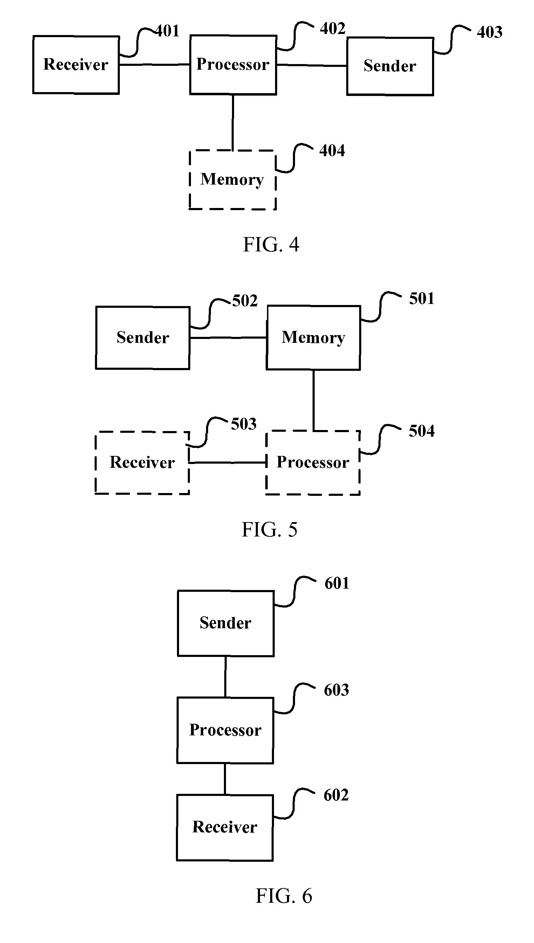

An embodiment of the present invention provides a base station controller. As shown in FIG. 4, the base station controller includes:
a receiver 401, configured to receive a request message, where the request message is used to indicate that the STA initiates a data service and carries position information of the STA, and the position information of the STA may be a cell identifier Cell ID or longitude and latitude of the STA, and receive information about one or more APs, where the information includes an SSID of the one or more APs;
a processor 402, configured to acquire, by using the position information of the STA, information about one or more APs, where the information includes an SSID of the one or more APs; and
a sender 403, configured to send a notification message, where the notification message carries the SSID of the one or more APs that is acquired by the processor.

The information about the one or more APs may further include one or more pieces of the following information: traffic load, channel frequency, user quantity, MAC address or serial number SN, authentication and encryption manner, and the like.

In this embodiment of the present invention, the sender may further be configured to send a query request, where the query request carries the position information of the STA.

Optionally, in this embodiment of the present invention, the processor may further be configured to perform filtering on the information about the one or more APs, so as to acquire an AP with a traffic load lower than a preset threshold.

The base station controller in this embodiment may further include:
a memory 404, configured to store position information of an AP in a management range of the BSC, or the information about the one or more APs that is received by the receiver, where the position information is a Cell ID or longitude and latitude of the AP in the management range of the BSC.

In a base station controller provided by this embodiment of the present invention, when an STA user initiates a data service without activating a Wi-Fi module, the base station controller acquires an SSID and other information of one or more APs near the STA and notifies the STA. The STA activates the Wi-Fi module, and scans only some APs based on the SSID, thereby reducing a waste of electricity and time due to an invalid scan, and improving resource utilization of a mobile communications network.

An embodiment of the present invention provides an access controller AC. As shown in FIG. 5, the access controller includes:
a memory 501, configured to store information about an AP managed by the AC, where the information about the AP includes a service set identifier SSID and position information, and may further include one or more pieces of the following information: position information, traffic load, user quantity, authentication and encryption manner, and the like; and
a sender 502, configure to send information about one or more APs to a base station controller, where the information includes an SSID of the one or more APs, and may further include one or more pieces of the following information: position information, traffic load, channel frequency, user quantity, MAC address or serial number SN, authentication and encryption manner, and the like.

The position information is a cell ID or longitude and latitude of the AP.

Optionally, the access controller provided by this embodiment of the present invention may further include:
a receiver 503, configured to receive an AP information query request, where the query request carries the position information or a MAC address or an SN; and
a processor 504, configure to query, according to the AP information query request, the information about one or more APs from the memory, where the information includes an SSID of the one or more APs, and may further include one or more pieces of the following information: traffic load, channel frequency, user quantity, MAC address or serial number SN, authentication and encryption manner, and the like.

In an access controller provided by the embodiment of the present invention, when an STA user initiates a data service without activating a Wi-Fi module, the access controller can enable a base station controller to rapidly acquire information about one or more APs near the STA, so that the base station controller notifies the STA of an SSID and other information of the one or more APs nearby. The STA activates the Wi-Fi module, and scans only some APs based on the SSID, thereby reducing a waste of electricity and time due to an invalid scan, and improving resource utilization of a mobile communications network.

An embodiment of the present invention provides a mobile terminal STA. As shown in FIG. 6, the STA includes:
a sender 601, configured to send a request message, where the request message is used to indicate that the STA initiates a data service and carries position information of the STA, and
the position information of the STA may be a cell identifier Cell ID or longitude and latitude of the STA;
a receiver 602, configured to receive a notification message, where the notification message carries an SSID and other information of one or more APs; and
a processor 603, configured to perform an active scan based on the SSID to discover an AP corresponding to the SSID.

A mobile terminal STA provided by this embodiment of the present invention can rapidly acquire an SSID and other information of one or more APs near the STA from a base station controller when the STA initiates a data service without activating a Wi-Fi module. After acquiring the AP information from the base station controller, the STA activates a Wi-Fi module, and scans only some APs based on the SSID, thereby reducing a waste of electricity and time due to an invalid scan, and improving resource utilization of a mobile communications network.

It should be noted that the method, device, and system embodiments provided by the embodiments of the present invention are applicable to various mobile communications networks, such as Wi-Fi, GSM, UMTS, LTE, and WiMAX. The base station controller may specifically be a base station controller BSC, a radio network controller RNC, a baseband unit BBU, and the like. Functions of the BSC and AC in the embodiments of the present invention may be implemented by another network element.

Based on the foregoing descriptions of the embodiments, a person skilled in the art may clearly understand that the present invention may be implemented by software plus a necessary hardware platform or by hardware only. Based on such an understanding, all or the part contributed by the technical solutions of the present invention to the technology in the background part may be implemented in a form of a software product. The computer software product is stored in a storage medium, such as a ROM/RAM, a magnetic disk, or an optical disc, and includes several instructions for instructing a computer device, which may be a personal computer, a server, or a network device, to perform the methods described in the embodiments or some parts of the embodiments of the present invention.

The foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A method for discovering a wireless access point AP, wherein the method comprises:
Receiving, by a base station controller BSC, a request message sent by a mobile terminal STA, wherein the request message is used to indicate that the STA initiates a data service and carries position information of the STA;
Acquiring, by the base station controller and by using the position information of the STA, information about one or more APs from an access controller AC, wherein the information comprises a service set identifier SSID of the one or more APs; and
Sending, by the base station controller, a notification message to the STA, wherein the notification message carries the SSID of the one or more APs, so that the STA performs an active scan based on the SSID to discover an AP corresponding to the SSID.

2. The method according to claim 1, wherein the position information of the STA comprises a cell identifier Cell ID or longitude and latitude of the STA.

3. The method according to claim 1, wherein the information further comprises traffic load of the one or more APs, and the base station controller acquires, by filtering, an AP with a traffic load lower than a preset threshold before the base station controller sends the notification message to the STA.

4. The method according to any one of claims 1 to 3, wherein after the receiving, by the base station controller, the request message sent by the mobile terminal STA, the base station controller sends a request response to the STA, notifying the STA that the BSC receives the request message.

5. A method for discovering a wireless access point AP, wherein the method comprises:
sending, by a mobile terminal STA, a request message to a base station controller BSC, wherein the request message is used to indicate that the STA initiates a data service and carries position information of the STA;
receiving, by the mobile terminal, a notification message sent by the BSC, wherein the notification message carries information about one or more APs, and the information comprises a service set identifier SSID of the one or more APs; and
activating, by the mobile terminal, a Wi-Fi module, and performing an active scan based on the SSID, to discover an AP corresponding to the SSID.

6. The method according to claim 5, wherein the position information of the STA is a cell identifier Cell ID or longitude and latitude of the STA.

7. The method according to any one of claim 5 or 6, wherein after the sending, by the mobile terminal STA, the request message to the base station controller BSC, the method further comprises a step:
receiving, by the STA, a request response sent by the BSC.

8. A wireless communications system, wherein the system comprises:
a base station controller BSC, configured to receive a request message sent by a mobile terminal STA, wherein the request message is used to indicate that the STA initiates a data service and carries position information of the STA; the BSC is configured to acquire, according to the position information of the STA, information about one or more wireless access points APs from an access controller AC, wherein the information comprises a service set identifier SSID of the one or more APs; and send a notification message to the STA, wherein the notification message carries the SSID of the one or more APs; and
the access controller AC, configured to provide the information about one or more APs managed by the AC for the base station controller, wherein the information comprises the SSID of the one or more APs.

9. The system according to claim 8, wherein the position information of the STA is a cell identifier Cell ID or longitude and latitude of the STA.

10. The system according to claim 8, wherein the information about the one or more APs further comprises a traffic load of the one or more APs, and the base station controller BSC is further configured to acquire, by filtering, an AP with a traffic load lower than a preset threshold.

11. The method according to any one of claims 8 to 10, wherein the BSC is further configured to send a request response to the STA after receiving the request message sent by the STA.

12. Abase station controller BSC, wherein the BSC comprises:
a receiver, configured to receive a request message, wherein the request message is used to indicate that a mobile terminal STA initiates a data service and carries position information of the STA, and receive information about one or more wireless access points APs, wherein the information comprises a service set identifier SSID of the one or more APs;
a processor, configured to acquire, by using the position information of the STA, information about the one or more APs, wherein the information comprises an SSID of the one or more APs; and
a sender, configured to send a notification message, wherein the notification message carries the SSID of the one or more APs that is acquired by the processor.

13. The base station controller according to claim 12, wherein the position information of the STA is a cell identifier Cell ID or longitude and latitude of the STA.

14. The base station controller according to claim 12, wherein the information about the one or more APs further comprises a traffic load of the one or more APs, and the processing module is further configured to acquire, by filtering, an AP with a traffic load lower than a preset threshold.

15. The base station controller according to any one of claims 12 to 14, wherein the sender is further configured to send a query request, wherein the query request carries the position information of the STA.

16. The base station controller according to claim 15, wherein the base station controller further comprises:
a memory, configured to store position information of an AP in a management range of the BSC, or the information about the one or more APs that is received by the receiver, wherein the position information is a Cell ID or longitude and latitude of the AP in the management range of the BSC.

17. An access controller AC, wherein the AC comprises:
a memory, configured to store information about a wireless access point AP managed by the AC, wherein the information about the AP comprises a service set identifier SSID and position information; and
a sender, configured to send information about one or more APs to a base station controller, wherein the information comprises an SSID of the one or more APs.

18. The access controller according to claim 17, wherein the position information is a cell identifier Cell ID or longitude and latitude of the AP.

19. The access controller according to any one of claim 17 or 18, wherein the access controller further comprises:
a receiver, configured to receive an AP information query request, wherein the query request carries the position information or a MAC address or an SN; and
a processor, configured to query, according to the AP information query request, the information about one or more APs from the memory, wherein the information comprises an SSID of the one or more APs.

20. A mobile terminal STA, wherein the STA comprises:
a sender, configured to send a request message to a base station controller, wherein the request message is used to indicate that the STA initiates a data service and carries position information of the STA;
a receiver, configured to receive a notification message sent by the base station controller, wherein the notification message carries a service set identifier SSID of one or more wireless access points APs; and
a processor, configured to perform an active scan based on the SSID to discover an AP corresponding to the SSID.

21. The mobile terminal according to claim 20, wherein the position information of the STA is a cell identifier Cell ID or longitude and latitude of the STA.
